# EUROPEAN PATENT SPECIFICATION

(11) **EP 4 304 332 B1**
(45) Date of publication and mention of the grant of the patent: **26.02.2025**
(21) Application number: 22709364.8
(22) Date of filing: 07.03.2022
(51) Int. Cl.: A01G 27/00, A01G 27/02, A01G 31/02

(54) **HYDROPONIC APPARATUS FOR GROWING PLANTS, METHOD OF USE AND KIT OF PARTS**
HYDROPONISCHE VORRICHTUNG ZUM ZÜCHTEN VON PFLANZEN, VERWENDUNGSVERFAHREN UND TEILESATZ
DISPOSITIF HYDROPONIQUE POUR LA CULTURE DE PLANTES, PROCÉDÉ D'UTILISATION ET KIT DE PIÈCES

(30) Priority: 08.03.2021 GB 202103198
(43) Date of publication of application: 17.01.2024
(73) Proprietor: Burgess, Simon, Leicester Leicestershire LE7 2DS (GB); Burgess, James, Leicester Leicestershire LE7 3XA (GB)
(72) Inventor: Burgess, Simon, Leicester Leicestershire LE7 2DS (GB); Burgess, James, Leicester Leicestershire LE7 3XA (GB)
(74) Representative: Rule, John Eric
(86) International application number: PCT/GB2022/050590
(87) International publication number: WO 2022/189774

(56) References cited:
- WO-A1-2014/035294
- SU-A1- 1 204 156
- US-A1- 2009 313 894

## Description

### TECHNICAL FIELD

The present invention relates to a hydroponic apparatus for growing plants; the present invention also relates to a method of use, and to a kit of parts, for forming the apparatus. More specifically, but not exclusively, the invention relates to a hydroponic apparatus of the ebb and flow type having a measured fluid delivery.

### BACKGROUND

It is known in horticulture to grow plants, usually crops, without soil, by using mineral nutrient solutions in an aqueous solvent, such methods are known as provide hydroponics. Plants may be grown with their roots exposed to a nutritious fluid or liquid. The roots of the plants may be physically supported by an inert medium.

Once such method known as Ebb and Flow (or flood drain) involves periodically filling or flooding a chamber or vessel in which plants are located with a nutrient rich solution (hydroponic solution) for a desired period of time and then subsequently draining the hydroponic solution from the chamber or vessel.

An object of the present invention is to provide a hydroponic apparatus which fills the chamber or vessel with a predefined volume of hydroponic solution during each fill phase of the hydroponic cycle.

It is another object of the invention to provide a simple apparatus capable of delivering the hydroponic solution and oxygen to the plant root zone.

WO2014035294 to Popov discloses a device for watering plants, by periodically inundating the same with a nutrient solution, the device comprises a trough, a working container for the nutrient solution, said container being connected to the trough with the aid of means for feeding in the solution for periodically inundating the trough and being linked to means for periodically injecting air. The device comprises an additional container for the nutrient solution, which container is fitted into the body of the device or next to the device. From below, the additional container has a neck in the form of at least one opening and/or pipe. A compressor is switched on with the aid of a timer. The problem addressed by the invention is that of lengthening the period of the self-acting, automatic operation of the device and increasing the compactness of the device.

The present invention seeks to provide an improvement in the field of hydroponic growing systems.

### SUMMARY

A first aspect of the invention provides a hydroponic apparatus for growing plants comprising a reservoir for a liquid and a growth vessel for a plant. A tank is disposed in the reservoir and is in fluidic communication with the reservoir and with the growth vessel. The tank is configured to be coupled to an air supply. The tank comprises an inlet valve, for allowing liquid in the reservoir to enter the tank, and an outlet valve, for allowing air in the tank to vent to atmosphere. The apparatus may comprise a controller for activating and deactivating the air supply.

Advantageously, the apparatus employs a single device to delivers both fluids, liquid and air, to the root zone, and negates the requirement for a pump or device dedicated to each fluid being delivered.

Further, there is no requirement to mount a liquid pump within the hydroponic solution or to pump the hydroponic solution through a liquid pump located externally of the reservoir.

Optionally, the air supply is an air pump.

Optionally, the air supply is an air compressor.

Optionally, the liquid is a nutrient rich aqueous solution.

Optionally, the outlet valve is pressure sensitive.

Optionally, the outlet valve is a pressure control valve.

Optionally, the outlet valve is adjustable.

Optionally, the apparatus comprises a first pipe connected to the air supply extends into the tank.

Optionally, the first pipe terminates with a diffuser.

Optionally, the first pipe terminates with an air stone.

Optionally, the first pipe comprises a check valve for inhibiting fluid flow towards the air supply.

Optionally, the growth vessel comprises a sump in which a drain is located.

Optionally, the apparatus comprises a fluid conduit extending between the growth vessel and the tank.

Optionally, the fluid conduit comprises a first port disposed in the tank.

Optionally, the first port is disposed proximate to a lowermost wall of the tank.

Optionally, the first port is located proximate the deepest region of the tank.

Optionally, the fluid conduit comprises a second port disposed in the growth vessel.

Optionally, the controller is a time activated switch.

A second aspect of the invention provides a method of use of a hydroponic apparatus for growing plants comprising: a reservoir comprising a liquid, a growth vessel comprising a plant being cultivated, and a tank disposed in the reservoir and in fluidic communication with the reservoir and with the growth vessel. The tank comprises an inlet valve, for allowing liquid in the reservoir to enter the tank, and an outlet valve, for allowing air in the tank to vent to atmosphere. The apparatus is coupled to an air supply. The method comprises charging the growth vessel with liquid from the tank by activating the air supply, supplying air to the tank and pressurising the tank. Liquid is forced the from the tank to enter the growth vessel. The method comprises discharging the growth vessel by deactivating the air supply and draining the liquid in the growth vessel back into the tank. The tank is vented to the atmosphere and the pressure in the tank is equalised with the liquid pressure in the reservoir.

Optionally, the further comprises filling the tank by;
opening the inlet valve; and
charging the tank with liquid from the reservoir.

A third aspect of the invention provides a kit of parts for growing plants comprising:
a reservoir chamber for a liquid;
a growth vessel for a plant;
a tank adapted to be disposed within the reservoir;
an inlet valve for allowing liquid in the reservoir to enter the tank;
an outlet valve for allowing air in the tank to vent to atmosphere; and
a support for supporting the growth vessel above the tank.

Optionally, the kit of parts further comprises a fluid conduit for coupling the outlet valve to the tank.

Optionally, the kit of parts further comprises a fluid conduit for coupling the tank to the growth vessel.

Optionally, the kit of parts further comprises an air supply.

Optionally, the air supply is an air pump.

Optionally, the kit of parts further comprises a fluid conduit for coupling an air supply to the tank.

Optionally, the kit of parts further comprises a controller for activating and deactivating the air supply.

### BRIEF DESCRIPTION OF THE DRAWINGS

Exemplary embodiments of the invention will now be described with reference to the accompanying drawings, in which:
Figure 1A is a plan view from above of a hydroponic apparatus according to embodiments of the disclosure;
Figure 1B is a schematic illustration of the hydroponic apparatus according to embodiments of the disclosure;
Figures 2A to 2C illustrate stages of filling a growth vessel of the hydroponic apparatus of Figures 1B with a fluid; and
Figures 3A and 3B illustrate stages of draining the growth vessel of the hydroponic apparatus of Figure 1B.

### DETAILED DESCRIPTION OF EMBODIMENTS

Detailed descriptions of specific embodiments of a hydroponic apparatus, components and methods are disclosed herein. It will be understood that the disclosed embodiments are merely examples of the way in which certain aspects of the invention can be implemented and do not represent an exhaustive list of all of the ways the invention may be embodied. As used herein, the word "exemplary" is used expansively to refer to embodiments that serve as illustrations, specimens, models, or patterns. Indeed, it will be understood that the hydroponic apparatus, components and methods described herein may be embodied in various and alternative forms. The Figures are not necessarily to scale and some features may be exaggerated or minimised to show details of particular components. Well-known components, materials or methods are not necessarily described in great detail in order to avoid obscuring the present disclosure. Any specific structural and functional details disclosed herein are not to be interpreted as limiting, but merely as a basis for the claims and as a representative basis for teaching one skilled in the art to variously employ the invention.

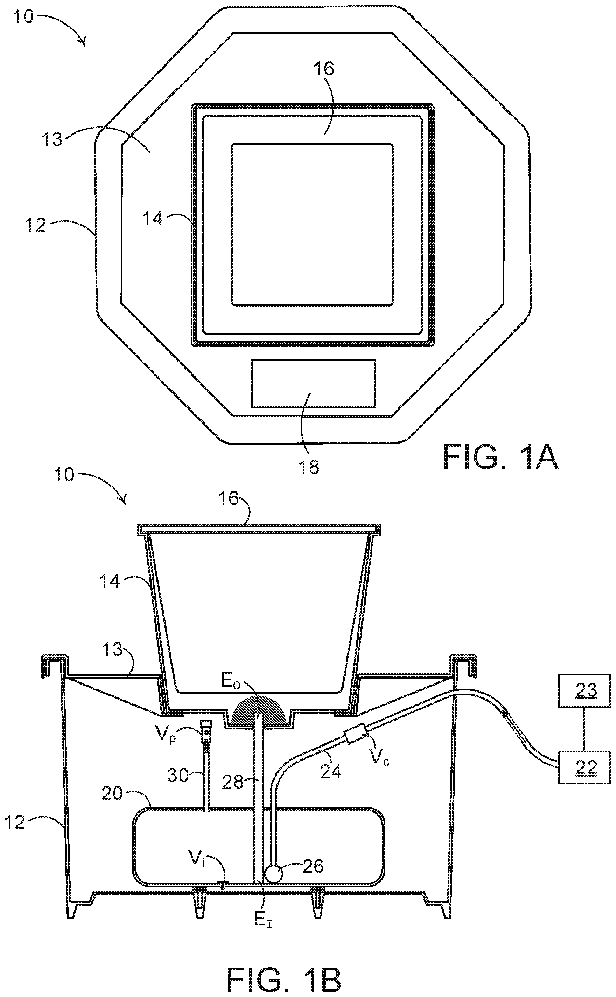

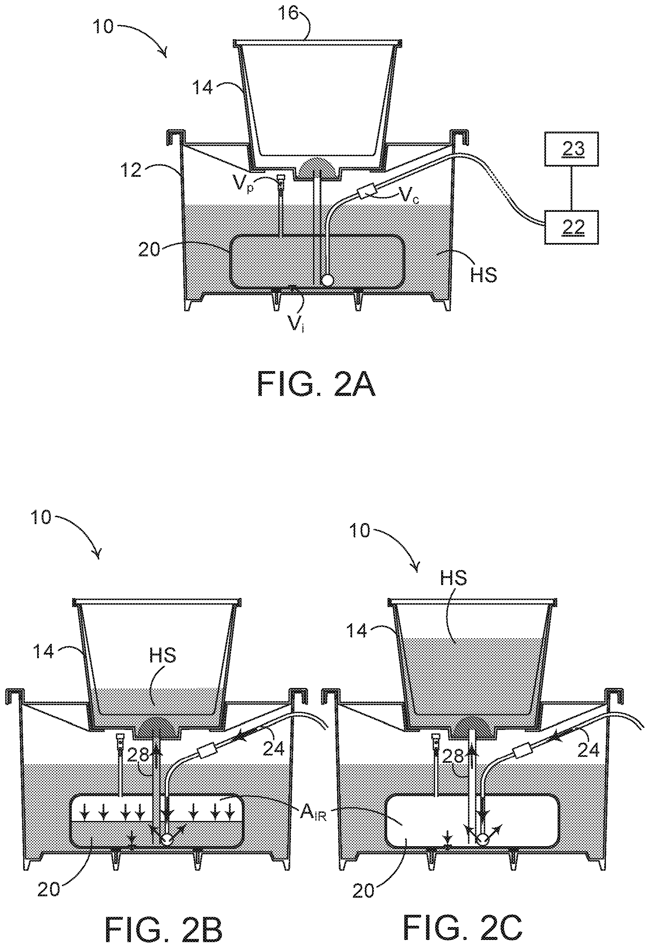

Referring to Figure 1, there is shown a plan view of a hydroponic apparatus 10. The apparatus 10 comprises a container forming a reservoir 12 having a lid, closure or support structure 13 capable of supporting a growth vessel 14 (along with the plant under cultivation and a predefined volume of a hydroponic solution HS, see Figure 2A, and optionally a growth or support medium). A pot 16 may be disposed in the growth vessel 14. The pot 14 may be removeable. The pot 14 is adapted to receive the plant or crop being cultivated, for example it may have apertures or openings to allow the passage of the hydroponic solution HS into and out of the interior of the pot 14. The lid 13 may optionally close an upper end of the reservoir 12, this may reduce evaporation of the hydroponic solution HS this may be advantageous where water supply is limited. The lid 13 may comprises an access 18 in the form of an opening or removable hatch. The access 18 may be useful for filling the reservoir with water or nutrients, measuring or monitoring the fluid level in the reservoir, and measuring characteristics of the hydroponic solution such as but not limited to nutrient level, oxygenation, or pH.

Optionally, the reservoir 12 may be substantially shaped as an octagonal prism, although other shapes may be employed for example but not limited to, cuboids, cylinders, hexagonal prisms. It will be appreciated that the side walls of the reservoir need not be vertical and the reservoir 12 may be an inverted square, hexagonal, octagonal or conical frustrum.

A tank 20 is disposed in the reservoir 12 and may be mounted on supports on an inner surface of a base wall of the container forming the reservoir 12.

The tank 20 comprises an inlet valve Vᵢ. The inlet valve Vᵢ may be mounted in a lowermost wall of the tank 20. The inlet valve Vᵢ provides that fluid can flow to flow into the tank 20 from the reservoir 12. The inlet valve Vᵢ may allow fluid to flow into the tank 20 from the reservoir when the pressure within the tank is less than the pressure in the reservoir 12 at the depth of the inlet valve Vᵢ. The inlet valve Vᵢ may be passive.

In other embodiments the inlet valve Vᵢ may be active and may be coupled to an actuator under the control of a controller, the controller may be coupled to one or more sensors, such as, but not limited, to pressure sensors. The controller may open or close the valve in dependence upon a measurement parameter being monitored by the one or more sensors.

A pressure control or pressure relief valve Vₚ is in communication with the tank 20 and may be located at an upper end of a fluid conduit 30 extending from an uppermost wall of the tank 20. The pressure control valve Vₚ allows air in the tank 20 to be released during the drain phase of the operational cycle.

The tank 20 is in fluid communication with the growth vessel 14 via a second fluid conduit 28. The second fluid conduit 28 comprises a first end or port E_{I} providing an inlet/outlet disposed proximate the lowermost wall of the tank 20. In this way, the tank 20 can be substantially emptied of hydroponic solution during the fill phase of the cycle.

The second fluid conduit 28 comprises a second end or port E_{O} providing an inlet/outlet located in a lower region of the growth vessel 14. The growth vessel 14 may comprise a well, sump or sink in a bottom wall thereof which may facilitate drainage of hydroponic solution back into the tank 20 during the drain period of the cycle.

The outlet end E_{O} of the second fluid conduit 28 may comprises a cover, filter or guard to prevent or inhibit undesired particulate matter flowing in to the tank 20, this may be further reduced by allow the outlet of the second fluid conduit 28 to stand proud of the surrounding region of the bottom wall of the growth vessel 14. This may help reduce cleaning and maintenance due to blockages or restrictions in fluid flow or interference in valve operation by particulate matter.

Additionally, or alternatively, the cover may serve to provide a diffuser; diffusing fluid flowing out of the second fluid conduit 28.

The tank 20 is in fluid communication with an air source in the form of air pump 22 via an air line 24 the air line 24 may comprise a pipe, hose or tube that may be flexible. Optionally, the air line comprises a check valve V_{c} to prevent flow of hydroponic solution from the tank 20 to the air pump 22.

Alternatively, the air pump 22 may be disposed at an elevation above the maximum fluid level in the reservoir 12, or at least a portion of the air line 24 may be routed above the maximum fluid level in the reservoir 12.

The air line 24 may comprise a diffuser in the form of an air stone 26 at an outlet end located in the tank 20. The air stone 26 may diffuse air as it flows into the tank 20, it may also act as a check valve or fluid restrictor inhibiting flow of the hydroponic solution into the air line 24.

In the illustrated embodiment, an air supply 22 takes the form of a pump or a compressor, it may be powered from mains electricity, a battery, a generator, one or more solar panel or wind turbines, combustion engine or other suitable power source.

In other embodiments, the air line 24 may be coupled to a tank of compressed air or a manual pump.

Figures 2A to 3B illustrate stages of a fill and drain cycle of the growth vessel 14.

Figure 2A shows the apparatus 10 with a hydroponic solution HS disposed in the reservoir and in the tank 20, the reservoir 12 can be filled via the access hatch, or may comprise a dedicated filling inlet in other embodiments. The air pump 22 is in an off or inactive state, that is to say air is not being supplied to the tank 20 via the air line 24. The hydroponic solution HS enters the tank 20 via the inlet valve Vᵢ since the pressure in the reservoir 12 is equal to the pressure in the tank 20.

A fill phase of the cycle commences by changing the state of the air pump 22 to an on or active condition in which air A_{IR} is supplied to the tank 20 via the air line 24.

In Figure 2B, the air pump 22 is in an on or active state, air A_{IR} has been supplied to the tank 20 via the air line 24. As the air A_{IR} is pumped into the tank 20 the air A_{IR}; being less dense than the hydroponic solution HS, rises to the top of the tank 20. The pressure in the tank 20 increases. In doing so the hydroponic solution HS is displaced from the tank 20 through the second fluid conduit 28 into the growth vessel 14.

In Figure 2C the air pump 22 has continued to charge or fill the tank 20 with air A_{IR} until the all the hydroponic solution HS has been raised into the growth vessel 14, or at least until the hydroponic solution HS fluid level in the tank 20 is below the inlet end E_{I} of the second fluid conduit 28.

Optionally, the air pump 22 remains in the on state, air A_{IR} continues to be pumped into the tank 20. When the pressure in the tank 20 rises sufficiently air A_{IR} escapes through the second fluid conduit 28 into the growth vessel 14 so as to aerate the hydroponic solution HS and the root zone of the plants being cultivated. The outlet valve Vₚ is configured to offer greater resistance for the air A_{IR} to escape to the atmosphere than the second fluid conduit 28. The air A_{IR} pressure in the tank 20 is greater than the pressure of the hydroponic solution HS in the reservoir 12 at the depth of the inlet valve Vᵢ. The inlet valve Vᵢ is thus closed and prevents the hydroponic solution HS in the reservoir 12 entering the tank 20.

The air pump 22 may be coupled to a controller or timer 23 which controls the length of time the air pump 22 is in the on condition. The timer 23 may be configured to allow the air pump 22 to supply air A_{IR} to the tank 20 for a desired period after the tank 20 has been emptied of the hydroponic solution HS or the maximum fill level of the growth vessel 14 has been reached. The air A_{IR} escapes the tank 20 via the second fluid conduit 28 into the growth vessel 14 whilst the pump 22 is active.

In some embodiments, the apparatus 10 may comprises one or more sensors and a controller coupled thereto which controls the operation of the air pump 22. The sensors may detect fluid levels in the tank 22, reservoir 12 or growth vessel 14. The sensors may detect characteristics of the hydroponic solution HS such as but not limited to its oxygenation level. Based upon data received from the sensors the controller may determine when to shut the air pump 22, for example, but not limited to, if sensor data indicates that oxygen level in the hydroponic solution HS is low the controller may allow the air pump 22 to run for an extended period. The controller may be coupled to other external devices or sensors such as light sources (growth lights) or light sensors, temperature or humidity sensors. The controller may adjust the fill / drain cycle in dependence upon information from the sensors to optimise growth of the plants, it may cease or reduce filling of the growth vessel when light levels in the growth environment are low or below a threshold value. The fill/drain cycle maybe adjusted in dependence upon the plant being cultivated; the controller may comprise one or more selectable pre-defined or user customisable programs. The controller may also allow remote monitoring or control of the apparatus 10.

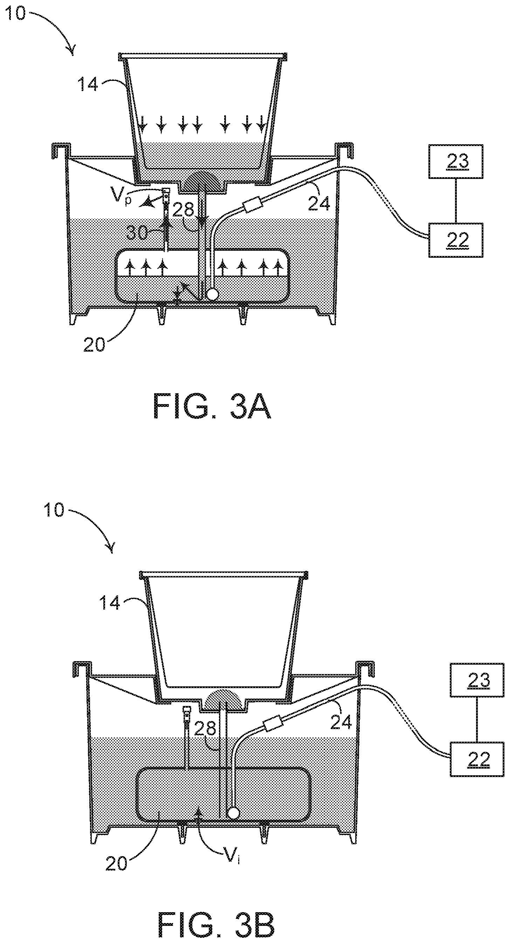

Figure 3A illustrates the apparatus 10 during the drain phase of the cycle. The drain phase commences when the air pump 22 is returned to an off or inactive state.

The hydroponic solution HS in the growth vessel 14 returns to the tank 20. Air A_{IR} in the tank 20 initially escapes through the second fluid conduit 28 into the growth vessel 14 until the liquid level in the tank 20 rises to submerge the inlet end E_{I} of the second fluid conduit 28. Since the pressure in the tank 20 is lower than the pressure exerted by the fluid in the growth vessel 14 the hydroponic solution HS returns to the tank 20. The pressure in the tank 20 is still sufficient to seal the inlet valve Vᵢ, preventing ingress of liquid in the reservoir 12 into the tank 20. The air A_{IR} in the tank 20 is compressed towards the upper or top wall of the tank 20. The pressure control valve Vₚ allows the air A_{IR} in the tank 20 to escape to the atmosphere.

The pressure control valve Vₚ, in the illustrated embodiment is disposed in the reservoir 12 above the maximum fill level of the reservoir 12. In other embodiments, the pressure control valve Vₚ may be disposed outside the reservoir 12.

The pressure control valve Vₚ may be variable such that the rate at which the hydroponic solution HS returns to the tank 20 can be controlled or adjusted.

Figure 3B illustrates the apparatus 10 during the drain phase, the hydroponic solution HS in the growth vessel has returned to the tank 20. As the hydroponic solution HS returns under the force of gravity to the tank 20 the pressure in the tank reduces. Since the tank 20 is vented to atmospheric pressure, if the volume of water returning to the tank 20 is less than that which was pumped out the pressure in the tank 20 will fall below the pressure of the liquid in the reservoir 12 at the depth of the inlet valve Vᵢ. Once the pressure of the fluids in the tank 20 is sufficiently low that the inlet valve Vᵢ will open to allow hydroponic solution HS from the reservoir to enter the tank 20, air A_{IR} in the tank 20 will be vented to the atmosphere. The tank 20 is thus once again full of hydroponic solution HS, this controlling the volume of liquid available for the next fill phase. Any loss of hydroponic fluid that occurred during the fill phase (for example by absorption into the plant roots or support medium or evaporation to the atmosphere) is replaced from the reservoir 12.

The volume of the tank 20 may be less than the volume of the growth vessel 14. The volume of the tank 20 may be selected so as to avoid or mitigate against overfilling the growth vessel. The volume of the tank 20 may be selected so to avoid or mitigate filling the growth vessel beyond the root zone of the plant under cultivation. The volume of liquid delivered to the growth vessel 14 may be adjusted by adjusting the depth of penetration of the second fluid conduit 28 in to the tank 20. The liquid delivery volume may reduce by raising the first end or port E_{I} to space it further from the bottom wall of the tank 20. The second fluid conduit 28 may be provided with an indicia, graduations or hatch markings to facilitate adjustment of the liquid delivery volume.

In those embodiments employing a pot 16, in which the plant is disposed, the pot 16 may be selected to be of suitable size to accommodate the plant, the pot 16 may be changed or replaced as the plant grows. The liquid delivery volume may be adjusted in dependence upon the pot 16 dimensions, plant size or variety or environmental conditions.

In the illustrated embodiment the second fluid conduit 28 passes through the top wall of the tank 20, in other embodiments the second fluid conduit 28 may enter the tank 20 through side wall or the bottom wall of the tank 20. In some embodiments the tank 20 may comprise a hatch or resealable closure for gaining access to an interior of the tank for example to facilitate cleaning of the interior. The second fluid conduit 28 pass into the tank 20 through closure so as to be removeable with the closure for maintenance and cleaning.

It can also be appreciated that various changes may be made within the scope of the present invention. For example, the size and shape of the growth vessel, tank and/or reservoir may be adjusted. The apparatus 10 may comprise two or more growth vessels in fluidic communication with the reservoir; each may be individually coupled to the reservoir in parallel with each other. In other embodiments two or more growth vessels in fluidic communication with the reservoir and each other in series, a first vessel may be filled from the tank, subsequent vessels may be gravity fed from a preceding vessel in the series. The reservoir may comprise two or more tanks, each of the tanks may be coupled to a respective growth vessel or may be coupled to a common growth vessel. The apparatus 10 may comprise a plurality of air supplies or pumps, each may be coupled to a respective tank or to a common tank. In embodiments, having two or more tanks the tanks may be in fluidic communication with each other.

Whilst the apparatus 10 is configured to deliver a pre-defined volume of liquid to the growth chamber the growth chamber may be provided with an overflow mechanism in the event of a malfunction such as but not limited to valve failure.

The controller may also be in communication with one or more fault detection sensors which indicate the apparatus 10 needs attention, maintenance or repair. Such sensors may include, but not limited to, pressure or air flow sensors for detecting low air supply from the air pump, tank or other air supply or for detecting valve failure or compromise.

The controller may also comprise or be coupled to a communication device for informing an operator of the condition of the apparatus 10, such device may take the form of one or more light or LED's, a monitor or screen or other visual display, modem, network interface (wired or wireless), Bluetooth or other radio communications device.

The apparatus 10 may be modular in construction and may be readily assembled, dismantled, upgraded or modified as required. The fluid pipes or conduits, fittings or connectors may be of push type or compression type such that no, or only basic tools, are required to assemble the apparatus 10. In this way the apparatus 10 may be readily dismantled for maintenance or cleaning. Components of the apparatus 10 may be readily interchanged, for example to increase or decrease the size of the tank or the volume of liquid a given tanks delivers. A growth vessel 14 or pot 16 of a suitable size may be mounted to the apparatus 10 in dependence of the plant's requirements.

It will be recognised that as used herein, directional references such as "top", "bottom", "base", "front", "back", "end", "side", "inner", "outer", "upper" and "lower" do not necessarily limit the respective features to such orientation, but may merely serve to distinguish these features from one another.

## Claims

1. A hydroponic apparatus (10) for growing plants, comprising a reservoir (12) for a liquid (HS) and a growth vessel (14) for a plant, wherein the hydroponic apparatus (10) further comprises a tank (20) disposed in the reservoir (12) and in fluidic communication with the reservoir (12) and with the growth vessel (14), wherein the tank (20) is configured and arranged to be coupled to an air supply (22), and wherein the tank (20) comprises an outlet valve (Vₚ), for allowing air (Aᵢᵣ) in the tank (20) to vent to atmosphere, **characterised in that** the tank (20) comprises an inlet valve (Vᵢ), for allowing liquid (HS) in the reservoir (12) to enter the tank (20).

2. A hydroponic apparatus (10) according to claim 1 further comprising a controller (23) for activating and deactivating an air supply (22).

3. A hydroponic apparatus (10) according to claim 1 further comprising:
an air supply (22) wherein the tank (20) is in fluidic communication with the with the air supply; and
a controller (23) for activating and deactivating the air supply (22).

4. A hydroponic apparatus (10) according to claim 3 wherein the air supply (22) is an air pump or an air compressor.

5. A hydroponic apparatus (10) according to claim 1 wherein the reservoir (12) comprises a liquid (HS) in the form of a nutrient rich aqueous solution.

6. A hydroponic apparatus (10) according to claim 1 wherein the outlet valve (Vₚ) is pressure sensitive.

7. A hydroponic apparatus (10) according to claim 1 wherein the outlet valve (Vₚ) is a pressure control valve.

8. A hydroponic apparatus (10) according to claim 6 wherein the outlet valve (Vₚ) is adjustable.

9. A hydroponic apparatus (10) according to claim 3 wherein a first pipe (24) connected to the air supply (22) extends into the tank (20).

10. A hydroponic apparatus (10) according to claim 9 wherein the first pipe (24) terminates with a diffuser (26) or with an air stone.

11. A hydroponic apparatus (10) according to claim 9 wherein the first pipe (24) comprises a check valve (Vₚ) for inhibiting fluid flow towards the air supply (22).

12. A hydroponic apparatus (10) according to claim 1 wherein the growth vessel (14) comprises a sump in which a drain is located.

13. A hydroponic apparatus (10) according to claim 1 wherein a fluid conduit (28) extends between the growth vessel (14) and the tank (20).

14. A hydroponic apparatus (10) according to claim 13 wherein the fluid conduit (28) comprises a first port (E_{I}) disposed in the tank (20).

15. A hydroponic apparatus (10) according to claim 14 wherein the first port (E_{I}) is disposed proximate to a lowermost wall of the tank (20).

16. A hydroponic apparatus (10) according to claim 14 wherein the first port (E_{I}) is located proximate the deepest region of the tank (20).

17. A hydroponic apparatus (10) according to claim 14 wherein the fluid conduit (28) comprises a second port (E_{O}) disposed in the growth vessel (14).

18. A hydroponic apparatus (10) according to claim 3 wherein the controller (23) is a time activated switch.

19. A method of use of a hydroponic apparatus (10) for growing plants comprising:
a reservoir (12) comprising a liquid (HS);
a growth vessel (14) comprising a plant being cultivated;
a tank (20) disposed in the reservoir (12) and in fluidic communication with the reservoir (12) and with the growth vessel (14),
an inlet valve (Vᵢ) for allowing liquid (HS) in the reservoir (12) to enter the tank (20),
an outlet valve (Vₚ) for allowing air (A_{IR}) in the tank (20) to vent to atmosphere; and
an air supply (22);
the method comprising:
charging the growth vessel (14) with liquid (HS) from the tank (20) by,
activating the air supply (22);
supplying air (A_{IR}) to the tank (20);
pressurising the tank (20);
forcing the liquid (HS) from the tank (20) to enter the growth vessel (14);
discharging the growth vessel (14) by,
deactivating the air supply (22);
draining the liquid (HS) in the growth vessel (14) back into the tank (20);
venting the tank (20) to atmosphere; and
equalising the pressure in the tank (20) with the liquid pressure in the reservoir (12).

20. A method according to claim 19 further comprising filling the tank (20) by;
opening the inlet valve (Vᵢ);
charging the tank (20) with liquid (HS) from the reservoir (12).

21. A kit of parts for growing plants comprising:
a reservoir chamber (12) for a liquid (HS);
a growth vessel (14) for a plant;
a tank (20) adapted to be disposed within the reservoir (12);
an outlet valve (Vₚ) for allowing air (A_{IR}) in the tank (20) to vent to atmosphere; and
a support for supporting the growth vessel (14) above the tank (20); **characterised by**
an inlet valve (Vᵢ) for allowing liquid (HS) in the reservoir (12) to enter the tank (20).

22. A kit of parts according to claim 21 further comprising a fluid conduit (30) for coupling the outlet valve (Vₚ) to the tank (20).

23. A kit of parts according to claim 21 further comprising a fluid conduit (28) for coupling the tank (20) to the growth vessel (14).

24. A kit of parts according to claim 21 further comprising an air supply (22).

25. A kit of parts according to claim 24 wherein the air supply (22) is an air pump.

26. A kit of parts according to claim 21 further comprising a fluid conduit (24) for coupling an air supply (22) to the tank (20).

27. A kit of parts according to claim 24 further comprising a controller (23) for activating and deactivating the air supply (22).

## Patentansprüche

1. Hydroponische Einrichtung (10) zum Züchten von Pflanzen, die ein Reservoir (12) für eine Flüssigkeit (HS) und ein Wachstumsgefäß (14) für eine Pflanze umfasst, wobei die hydroponische Einrichtung (10) weiter einen Tank (20) umfasst, der in dem Reservoir (12) angeordnet ist und in strömungstechnischer Kommunikation mit dem Reservoir (12) und mit dem Wachstumsgefäß (14) steht, wobei der Tank (20) so konfiguriert und angeordnet ist, dass er mit einer Luftzufuhr (22) gekoppelt werden soll, und wobei der Tank (20) ein Auslassventil (Vp) umfasst, um zuzulassen, das Luft (Aᵢᵣ) aus dem Tank (20) in die Atmosphäre entlüftet wird, **dadurch gekennzeichnet, dass** der Tank (20) ein Einlassventil (Vᵢ) umfasst, um zuzulassen, dass Flüssigkeit (HS) aus dem Reservoir (12) in den Tank (20) eintritt.

2. Hydroponische Einrichtung (10) nach Anspruch 1, die weiter eine Steuereinheit (23) zum Aktivieren und Deaktivieren einer Luftzufuhr (22) umfasst.

3. Hydroponische Einrichtung (10) nach Anspruch 1, weiter umfassend:
eine Luftzufuhr (22), wobei der Tank (20) in strömungstechnischer Kommunikation mit der Luftzufuhr steht; und
eine Steuereinheit (23) zum Aktivieren und Deaktivieren der Luftzufuhr (22).

4. Hydroponische Einrichtung (10) nach Anspruch 3, wobei die Luftzufuhr (22) eine Luftpumpe oder ein Luftkompressor ist.

5. Hydroponische Einrichtung (10) nach Anspruch 1, wobei das Reservoir (12) eine Flüssigkeit (HS) in Form einer nährstoffreichen wässrigen Lösung umfasst.

6. Hydroponische Einrichtung (10) nach Anspruch 1, wobei das Auslassventil (Vₚ) druckempfindlich ist.

7. Hydroponische Einrichtung (10) nach Anspruch 1, wobei das Auslassventil (Vₚ) ein Druckregelventil ist.

8. Hydroponische Einrichtung (10) nach Anspruch 6, wobei das Auslassventil (Vₚ) anpassbar ist.

9. Hydroponische Einrichtung (10) nach Anspruch 3, wobei sich ein mit der Luftzufuhr (22) verbundenes erstes Rohr (24) in den Tank (20) erstreckt.

10. Hydroponische Einrichtung (10) nach Anspruch 9, wobei das erste Rohr (24) mit einem Diffusor (26) oder einem Ausströmstein endet.

11. Hydroponische Einrichtung (10) nach Anspruch 9, wobei das erste Rohr (24) ein Rückschlagventil (V_{c}) zum Unterbinden von Flüssigkeitsfluss zur Luftzufuhr (22) umfasst.

12. Hydroponische Einrichtung (10) nach Anspruch 1, wobei das Wachstumsgefäß (14) einen Sammelbehälter umfasst, in dem ein Abfluss gelegen ist.

13. Hydroponische Einrichtung (10) nach Anspruch 1, wobei sich zwischen dem Wachstumsgefäß (14) und dem Tank (20) eine Flüssigkeitsleitung (28) erstreckt.

14. Hydroponische Einrichtung (10) nach Anspruch 13, wobei die Flüssigkeitsleitung (28) einen ersten Anschluss (E_{I}) umfasst, der im Tank (20) angeordnet ist.

15. Hydroponische Einrichtung (10) nach Anspruch 14, wobei der erste Anschluss (E_{I}) in der Nähe einer untersten Wand des Tanks (20) angeordnet ist.

16. Hydroponische Einrichtung (10) nach Anspruch 14, wobei der erste Anschluss (E_{I}) in der Nähe des tiefsten Bereichs des Tanks (20) gelegen ist.

17. Hydroponische Einrichtung (10) nach Anspruch 14, wobei die Flüssigkeitsleitung (28) einen zweiten Anschluss (Eₒ) umfasst, der im Wachstumsgefäß (14) angeordnet ist.

18. Hydroponische Einrichtung (10) nach Anspruch 3, wobei die Steuereinheit (23) ein zeitaktivierter Schalter ist.

19. Verfahren zur Verwendung einer hydroponischen Einrichtung (10) zum Züchten von Pflanzen, umfassend:
ein Reservoir (12), das eine Flüssigkeit (HS) umfasst;
ein Wachstumsgefäß (14), das eine zu kultivierende Pflanze umfasst;
einen Tank (20), der im Reservoir (12) angeordnet ist und in strömungstechnischer Kommunikation mit dem Reservoir (12) und mit dem Wachstumsgefäß (14) steht,
ein Einlassventil (Vᵢ), um zuzulassen, dass Flüssigkeit (HS) aus dem Vorratsbehälter (12) in den Tank (20) eintritt,
ein Auslassventil (Vₚ), um zuzulassen, dass Luft (AIR) aus dem Tank (20) in die Atmosphäre entlüftet wird; und
eine Luftzufuhr (22);
wobei das Verfahren Folgendes umfasst:
Beladen des Wachstumsgefäßes (14) mit Flüssigkeit (HS) aus dem Tank (20) durch
Aktivieren der Luftzufuhr (22);
Abgeben von Luft (A_{IR}) an den Tank (20);
Druckbeaufschlagen des Tanks (20);
Erzwingen, dass die Flüssigkeit (HS) aus dem Tank (20) in das Wachstumsgefäß (14) eintritt;
Entleeren des Wachstumsgefäßes (14) durch
Deaktivieren der Luftzufuhr (22);
Ablassen der Flüssigkeit (HS) im Wachstumsgefäß (14) zurück in den Tank (20);
Entlüften des Tanks (20) in die Atmosphäre; und
Angleichen des Drucks im Tank (20) an den Flüssigkeitsdruck im Vorratsbehälter (12).

20. Verfahren nach Anspruch 19, weiter umfassend Befüllen des Tanks (20) durch:
Öffnen des Einlassventils (Vᵢ);
Beladen des Tanks (20) mit Flüssigkeit (HS) aus dem Vorratsbehälter (12).

21. Teilebausatz zum Züchten von Pflanzen, umfassend:
eine Reservoirkammer (12) für eine Flüssigkeit (HS);
ein Wachstumsgefäß (14) für eine Pflanze;
einen Tank (20), der zur Anordnung innerhalb des Vorratsbehälters (12) angepasst ist;
ein Auslassventil (Vₚ), um zuzulassen, dass Luft (AIR) aus dem Tank (20) in die Atmosphäre entlüftet wird;
und eine Stütze zum Stützen des Wachstumsgefäßes (14) über dem Tank (20); **gekennzeichnet durch**
ein Einlassventil (Vi), um zuzulassen, dass Flüssigkeit (HS) aus dem Vorratsbehälter (12) in den Tank (20) eintritt.

22. Teilebausatz nach Anspruch 21, der weiter eine Flüssigkeitsleitung (30) zum Koppeln des Auslassventils (Vₚ) mit dem Tank (20) umfasst.

23. Teilebausatz nach Anspruch 21, der weiter eine Flüssigkeitsleitung (28) zum Koppeln des Tanks (20) mit dem Wachstumsgefäß (14) umfasst.

24. Teilebausatz nach Anspruch 21, der weiter eine Luftzufuhr (22) umfasst.

25. Teilebausatz nach Anspruch 24, wobei die Luftzufuhr (22) eine Luftpumpe ist.

26. Teilebausatz nach Anspruch 21, der weiter eine Flüssigkeitsleitung (24) zum Koppeln einer Luftzufuhr (22) mit dem Tank (20) umfasst.

27. Teilebausatz nach Anspruch 24, der weiter eine Steuereinheit (23) zum Aktivieren und Deaktivieren der Luftzufuhr (22) umfasst.

## Revendications

1. Dispositif hydroponique (10) pour cultiver des plantes, comprenant une cuve (12) pour un liquide (HS) et un récipient de culture (14) pour une plante, dans lequel le dispositif hydroponique (10) comprend en outre un réservoir (20) disposé dans la cuve (12) et en communication fluide avec la cuve (12) et avec le récipient de culture (14), dans lequel le réservoir (20) est configuré pour et agencé pour être couplé à une alimentation d'air (22), et dans lequel le réservoir (20) est configuré pour et agencé pour être couplé à une alimentation d'air (22), et dans lequel le réservoir (20) comprend une soupape de sortie (Vₚ), pour permettre à l'air (Aᵢᵣ) dans le réservoir (20) d'être ventilé vers l'atmosphère, **caractérisé en ce que** le réservoir (20) comprend une soupape d'entrée (Vᵢ) pour permettre au liquide (HS) dans la cuve (12) d'entrer dans le réservoir (20).

2. Dispositif hydroponique (10) selon la revendication 1 comprenant en outre une commande (23) pour activer et désactiver une alimentation d'air (22).

3. Dispositif hydroponique (10) selon la revendication 1 comprenant en outre :
une alimentation d'air (22) dans lequel le réservoir (20) est en communication fluide avec l'alimentation d'air ; et
une commande (23) pour activer et désactiver l'alimentation d'air (22).

4. Dispositif hydroponique (10) selon la revendication 3 dans lequel l'alimentation d'air (22) est une pompe à air ou un compresseur d'air.

5. Dispositif hydroponique (10) selon la revendication 1 dans lequel la cuve (12) comprend un liquide (HS) sous la forme d'une solution aqueuse riche en nutriments.

6. Dispositif hydroponique (10) selon la revendication 1 dans lequel la soupape de sortie (V_{P}) est sensible à la pression.

7. Dispositif hydroponique (10) selon la revendication 1 dans lequel la soupape de sortie (V_{P}) est une soupape de commande de pression.

8. Dispositif hydroponique (10) selon la revendication 6 dans lequel la soupape de sortie (V_{P}) est réglable.

9. Dispositif hydroponique (10) selon la revendication 3 dans lequel un premier tuyau (24) connecté à l'alimentation d'air (22) s'étend dans le réservoir (20).

10. Dispositif hydroponique (10) selon la revendication 9 dans lequel le premier tuyau (24) se termine par un diffuseur (26) ou une pierre poreuse.

11. Dispositif hydroponique (10) selon la revendication 9 dans lequel le premier tuyau (24) comprend un clapet anti-retour (V_{c}) pour empêcher le fluide de s'écouler vers l'alimentation d'air (22).

12. Dispositif hydroponique (10) selon la revendication 1 dans lequel le récipient de culture (14) comprend un puisard dans lequel un drain est situé.

13. Dispositif hydroponique (10) selon la revendication 1 dans lequel un conduit de fluide (28) s'étend entre le récipient de culture (14) et le réservoir (20).

14. Dispositif hydroponique (10) selon la revendication 13 dans lequel le conduit de fluide (28) comprend un premier orifice (E₁) disposé dans le réservoir (20).

15. Dispositif hydroponique (10) selon la revendication 14 dans lequel le premier orifice (E₁) est disposé à proximité d'une paroi la plus basse du réservoir (20).

16. Dispositif hydroponique (10) selon la revendication 14 dans lequel le premier orifice (E₁) est situé à proximité de la région la plus profonde du réservoir (20).

17. Dispositif hydroponique (10) selon la revendication 14 dans lequel le conduit de fluide (28) comprend un second orifice (Eₒ) disposé dans le récipient de culture (14).

18. Dispositif hydroponique (10) selon la revendication 3 dans lequel la commande (23) est un commutateur activé en fonction du temps.

19. Procédé d'utilisation d'un dispositif hydroponique (10) pour cultiver des plantes comprenant :
une cuve (12) comprenant un liquide (HS) ;
un récipient de culture (14) comprenant une plante étant cultivée ;
un réservoir (20) disposé dans la cuve (12) et en communication fluide avec la cuve (12) et avec le récipient de culture (14),
une soupape d'entrée (Vᵢ) pour permettre au liquide (HS) dans la cuve (12) d'entrer dans le réservoir (20),
une soupape de sortie (Vₚ) pour permettre à l'air (A_{IR}) dans le réservoir (20) d'être ventilé vers l'atmosphère ; et une alimentation d'air (22) ;
le procédé comprenant :
de charger le récipient de culture (14) avec du liquide (HS) depuis le réservoir (20) en,
activant l'alimentation d'air (22) ;
alimentant l'air (A_{IR}) vers le réservoir (20) ;
mettant sous pression le réservoir (20) ;
forçant le liquide (HS) depuis le réservoir (20) à entrer dans le récipient de culture (14) ;
décharger le récipient de culture (14) en,
désactivant l'alimentation d'air (22) ;
drainant le liquide (HS) dans le récipient de culture (14) vers le réservoir (20) ;
ventilant le réservoir (20) vers l'atmosphère ; et
égalisant la pression dans le réservoir (20) avec la pression de liquide dans la cuve (12).

20. Procédé selon la revendication 19 comprenant en outre de remplir le réservoir (20) en ;
ouvrant la soupape d'entrée (Vᵢ) ;
chargeant le réservoir (20) avec du liquide (HS) depuis la cuve (12).

21. Kit de pièces pour cultiver des plantes comprenant :
une chambre de cuve (12) pour un liquide (HS) ;
un récipient de culture (14) pour une plante ;
un réservoir (20) adapté pour être disposé dans la cuve (12) ;
une soupape de sortie (V_{P}) pour permettre à l'air (A_{IR}) dans le réservoir (20) d'être ventilé vers l'atmosphère ; et
un support pour supporter le récipient de culture (14)au-dessus du réservoir (20) ; **caractérisé par**
une soupape d'entrée (Vᵢ) pour permettre au liquide (HS) dans la cuve (12) d'entrer dans le réservoir (20).

22. Kit de pièces selon la revendication 21 comprenant en outre un conduit de fluide (30) pour coupler la soupape de sortie (V_{P}) au réservoir (20).

23. Kit de pièces selon la revendication 21 comprenant en outre un conduit de fluide (28) pour coupler le réservoir (20) au récipient de culture (14).

24. Kit de pièces selon la revendication 21 comprenant en outre une alimentation d'air (22).

25. Kit de pièces selon la revendication 24 dans lequel l'alimentation d'air (22) est une pompe à air.

26. Kit de pièces selon la revendication 21 comprenant en outre un conduit de fluide (24) pour coupler une alimentation d'air (22) au réservoir (20).

27. Kit de pièces selon la revendication 24 comprenant en outre une commande (23) pour activer et désactiver l'alimentation d'air (22).
